(19) Europäisches Patentamt
European Patent Office
Office européen des brevets

(11) EP 3 458 518 B1

(12) **EUROPEAN PATENT SPECIFICATION**

(45) Date of publication and mention of the grant of the patent:
**23.06.2021 Bulletin 2021/25**

(21) Application number: **17734471.0**

(22) Date of filing: **19.05.2017**

(51) Int Cl.:
***C08L 27/12*** *(2006.01)* ***C08L 79/08*** *(2006.01)*
***C08L 83/10*** *(2006.01)*

(86) International application number:
**PCT/IB2017/052978**

(87) International publication number:
**WO 2017/199222 (23.11.2017 Gazette 2017/47)**

(54) **ARTICLE COMPRISING A COMPOSITE OF A FLUOROELASTOMER AND A POLYIMIDE ON A METAL SUBSTRATE**

ARTIKEL ENTHALTEND EINEN VERBUNDWERKSTOFF AUS EINEM FLUORELASTOMEREN UND EINEM POLYIMID AUF EINEM METALLISCHEN SUBSTRAT

ARTICLE COMPRENANT UN COMPOSITE À BASE D'UN ÉLASTOMÈRE FLUORÉ ET D'UNE POLYIMIDE SUR UN SUPPORT MÉTALLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2016 US 201662339394 P**

(43) Date of publication of application:
**27.03.2019 Bulletin 2019/13**

(73) Proprietor: **SHPP Global Technologies B.V.**
**4612 PX Bergen op Zoom (NL)**

(72) Inventors:
- **SHEN, Liang**
  **Pudong**
  **Shanghai 201319 (CN)**
- **LIU, Huabin**
  **Pudong**
  **Shanghai 201319 (CN)**
- **DAI, Mian**
  **Pudong**
  **Shanghai 201319 (CN)**
- **SHAN, Wei**
  **Pudong**
  **Shanghai 201319 (CN)**

(74) Representative: **Office Freylinger**
**P.O. Box 48**
**8001 Strassen (LU)**

(56) References cited:
**EP-A1- 1 584 661**
**WO-A2-02/053358**
**CN-A- 106 380 755**
**JP-A- 2017 071 686**
**US-A- 5 626 907**
**US-A1- 2005 054 753**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### BACKGROUND

Fluoroelastomers such as perfluoroelastomers are currently used in a variety of applications in which severe environments are encountered, including high temperatures and aggressive chemicals. For example, fluoroelastomers find use as O-rings, gaskets, pipes, fittings, hoses, stem seals, shaft seals, diaphragms, electric wires, shock-absorbing materials, , which are used under severe environments such as in automotive, aerospace, and oil and gas applications. Fluoropolymers provide excellent mechanical properties as well as resistance to substances such as mineral oils, hydraulic fluids, solvents, and chemical agents of diverse nature over a wide range of working temperatures, from low to high temperatures. One problem with conventional fluoroelastomers, however, is that they can have poor adhesion, particularly to metal surfaces.

US 2005/054753 A1 relates to a sealing composition which comprises a crosslinkable fluoroelastomer, a crosslinking agent for this elastomer and a reinforcing polyimide resin powder; and seals such as O-rings, made by molding the composition into a prescribed shape and crosslinking the molded article. Seals free from metals and sulfur can be made from a fluoroelastomer suitable for the production unit for semiconductor devices without a scatter of physical properties within one seal or among seals, and the obtained seals are lowered in the compression set determined ate the same hardness level to cause little permanent set by compression in use, thus having a prolonged service life.

Accordingly, there remains a continuing need in the art for improved fluoroelastomer composites, particularly composites with improved adhesion to metal surfaces.

### SUMMARY

The present invention provides an article comprising a composite disposed on at least a portion of a metal substrate.

The composite comprises

a fluoroelastomer,
0.1 to 5.0 parts by weight of a vulcanizing agent, based on 100 parts by weight of the fluoroelastomer,
5 to 50 parts by weight of a polyimide, based on 100 parts by weight of the fluoroelastomer, and
0 to 20 parts by weight of an additive composition, based on 100 parts by weight of the fluoroelastomer,
wherein the polyimide is a polyetherimide homopolymer or copolymer as defined in claim 1.

A method of making a composite comprises blending a fluoroelastomer, 0.1 to 5.0 parts by weight of a vulcanizing agent per hundred parts of the fluoroelastomer, 5 to 50 parts by weight of a polyimide per hundred parts of the fluoroelastomer, and 0 to 20 parts by weight of an additive composition based per hundred parts by weight of the fluoroelastomer, and curing the blend to provide a composite comprising the polyimide substantially evenly dispersed in the fluoroelastomer.

The above-described and other features are exemplified by the following figures and detailed description.

### BRIEF DESCRIPTION OF THE DRAWINGS

The following figures are exemplary embodiments.

FIG. 1A and 1B are SEM images of a neat FKM fluoroelastomer compared to a PEI/FKM composite of the present disclosure.
FIG. 2 shows a seal for automotive transmission gear box bench testing.
FIG. 3 shows SEMs of a fluoroelastomer composition with PEI. FIG. 3A is an SEM of the composition of Example 4 before cure. FIG. 3B is an SEM of the composition of Example 4 after cure.
FIG. 4 shows SEMs of a fluoroelastomer composition with PEI. FIG. 4A is an SEM of the composition of Example 5 before cure. FIG. 4B is an SEM of the composition of Example 5 after cure.

### DETAILED DESCRIPTION

The present inventors have discovered that fluoroelastomers can have poor metal adhesion performance, particularly when used for oil sealing and vibration absorbing applications. The inventors found that a composite of a fluoroelastomer with a polyimide exhibited good miscibility between the fluoroelastomer and the polyimide and that the polyimide was well-dispersed and distributed in the fluoroelastomer matrix. The composites had both superior mechanical

properties and metal adhesion performance.

The composite comprises a fluoroelastomer, a vulcanizing agent. a polyimide, and an additive composition. The composite comprises a fluoroelastomer, 0.1 to 5.0 parts by weight of a vulcanizing agent, based on 100 parts by weight of the fluoroelastomer, 5 to 50 parts by weight of the polyimide based on 100 parts by weight of the fluoroelastomer, and 0 to 20 parts by weight of the additive composition based on 100 parts by weight of the fluoroelastomer. Exemplary composites are polyimide-filled fluoroelastomers in which the polyimide is substantially fully dispersed in the fluoroelastomer. Substantial dispersion of the polyimide in the fluoroelastomer can be observed using SEM imaging, wherein substantially no aggregation or phase separation of the polyimide are observed. In an embodiment, the composite is a cured composite.

In an embodiment, the composite or cured composite has a tensile strength that is at least 25% greater than that of the neat fluoroelastomer measured according to ASTM D 412.

In an embodiment, the composite or cured composite has superior metal adhesion compared to the same composition without the polyimide. Adhesion can be measured using the cross cut tap test according to ASTM D3359, the peeling testing according to ASTM D1876, or a combination thereof. Improved adhesion comprises a 10% or greater improvement in adhesion based upon one or both of the foregoing tests.

The fluoroelastomer may be categorized under ASTM D1418 and the ISO 1629 designation of FKM, for example. The fluoroelastomer can include a copolymer of hexafluoropropylene (HFP) and vinylidene fluoride (VDF or VF2), terpolymers of tetrafluoroethylene (TFE), vinylidene fluoride, and hexafluoropropylene, perfluoromethylvinylether (PMVE), copolymers of TFE and propylene, and copolymers of TFE, PMVE. A combination comprising at least one of the foregoing fluoroelastomers can be used. The fluorine content typically varies, for example 66 to 70 wt%, based on the total weight of the fluoroelastomer. FKM is a fluoro-rubber of the polymethylene type having substituent fluoro and perfluoroalkyl or perfluoroalkoxy groups on the polymer chain.

Usually, polyimides comprise more than 1, for example 3 to 1000, or 5 to 500, or 10 to 100, structural units of formula (1)

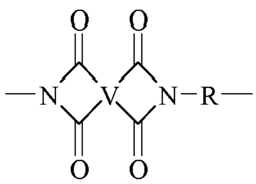

(1)

wherein each V is the same or different, and is a substituted or unsubstituted tetravalent $C_{4-40}$ hydrocarbon group, for example a substituted or unsubstituted $C_{6-20}$ aromatic hydrocarbon group, a substituted or unsubstituted, straight or branched chain, saturated or unsaturated $C_{2-20}$ aliphatic group, or a substituted or unsubstituted $C_{4-8}$ cycloalkylene group or a halogenated derivative thereof, in particular a substituted or unsubstituted $C_{6-20}$ aromatic hydrocarbon group. Exemplary aromatic hydrocarbon groups include any of those of the formulas

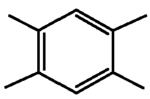, 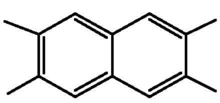, 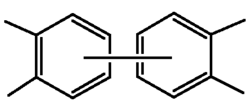, or 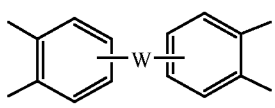

wherein W is -O-, -S-, -C(O)-, $-SO_2-$, -SO-, $-C_yH_{2y}-$ wherein y is an integer from 1 to 5 or a halogenated derivative thereof (which includes perfluoroalkylene groups), or a group of the formula T as described in formula (3) below.

Each R in formula (1) is the same or different, and is a substituted or unsubstituted divalent organic group, such as a $C_{6-20}$ aromatic hydrocarbon group or a halogenated derivative thereof, a straight or branched chain $C_{2-20}$ alkylene group or a halogenated derivative thereof, a $C_{3-8}$ cycloalkylene group or halogenated derivative thereof, in particular a divalent group of formulas (2)

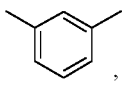, 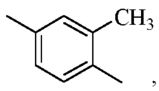, 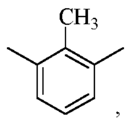, 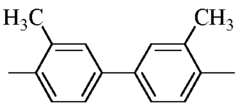, 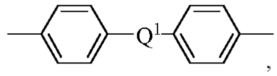,

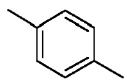, 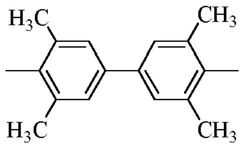, 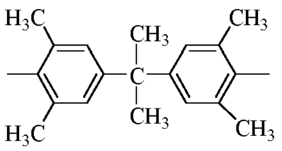, 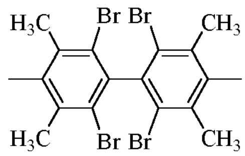,

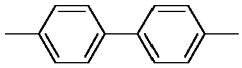, or 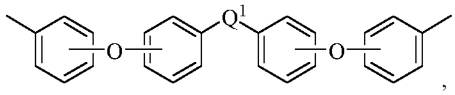, (2)

wherein $Q^1$ is -O-, -S-, -C(O)-, $-SO_2-$, -SO-, $-C_yH_{2y}-$ wherein y is an integer from 1 to 5 or a halogenated derivative thereof (which includes perfluoroalkylene groups), or $-(C_6H_{10})_z-$ wherein z is an integer from 1 to 4. In an embodiment R is m-phenylene, p-phenylene, or a diaryl sulfone.

The polyimides of the composites used in the present invention are polyetherimides as defined herein below. These polyetherimides are a class of polyimides that comprise more than 1, for example 3 to 1000, or 5 to 500, or 10 to 100 structural units of formula (3)

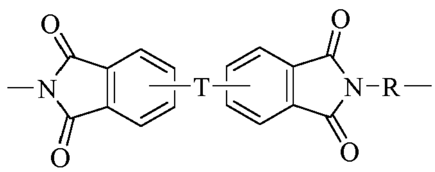 (3)

wherein each R is the same or different, and is as described in formula (1).

Further in formula (3), T is -O- or a group of the formula -O-Z-O- wherein the divalent bonds of the -O- or the -O-Z-O- group are in the 3,3', 3,4', 4,3', or the 4,4' positions. The group Z in -O-Z-O- of formula (3) is a substituted or unsubstituted divalent organic group, and can be an aromatic $C_{6-24}$ monocyclic or polycyclic moiety optionally substituted with 1 to 6 $C_{1-8}$ alkyl groups, 1 to 8 halogen atoms, or a combination comprising at least one of the foregoing, provided that the valence of Z is not exceeded. Exemplary groups Z include groups derived from a dihydroxy compound of formula (4)

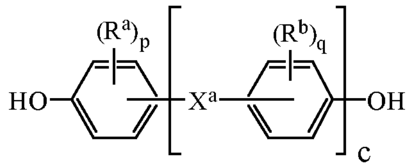 (4)

wherein $R^a$ and $R^b$ can be the same or different and are a halogen atom or a monovalent $C_{1-6}$ alkyl group, for example; p and q are each independently integers of 0 to 4; c is 0 to 4; and $X^a$ is a bridging group connecting the hydroxy-substituted aromatic groups, where the bridging group and the hydroxy substituent of each $C_6$ arylene group are disposed ortho, meta, or para (specifically para) to each other on the $C_6$ arylene group. The bridging group $X^a$ can be a single bond, -O-, -S-, -S(O)-, $-S(O)_2-$, -C(O)-, or a $C_{1-18}$ organic bridging group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$ organic group can be disposed such that the $C_6$ arylene groups connected thereto are each connected to a common alkylidene carbon or to different carbons of the $C_{1-18}$ organic bridging group. A specific example of a group Z is a divalent group of formula (4a)

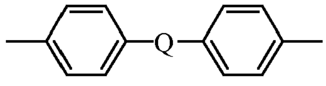 (4a)

wherein Q is -O-, -S-, -C(O)-, $-SO_2-$, -SO-, or $-C_yH_{2y}-$ wherein y is an integer from 1 to 5 or a halogenated derivative thereof (including a perfluoroalkylene group). In a specific embodiment Z is a derived from bisphenol A, such that Q in formula (3a) is 2,2-isopropylidene.

In an embodiment in formula (3), R is m-phenylene or p-phenylene and T is -O-Z-O- wherein Z is a divalent group of formula (4a). Alternatively, R is m-phenylene or p-phenylene and T is -O-Z-O wherein Z is a divalent group of formula (4a) and Q is 2,2-isopropylidene.

In some embodiments, the polyetherimide can be a copolymer, for example, a polyetherimide sulfone copolymer comprising structural units of formula (1) wherein at least 50 mole% of the R groups are of formula (2) wherein $Q^1$ is $-SO_2-$ and the remaining R groups are independently p-phenylene or m-phenylene or a combination comprising at least one of the foregoing; and Z is 2,2'-(4-phenylene)isopropylidene.

Alternatively, the polyetherimide copolymer optionally comprises additional structural imide units, for example imide units of formula (1) wherein R and V are as described in formula (1), for example V is

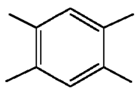

or

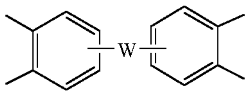

wherein W is a single bond, -S-, -C(O)-, $-SO_2-$, -SO-, or $-C_yH_{2y}-$ wherein y is an integer from 1 to 5 or a halogenated derivative thereof (which includes perfluoroalkylene groups). These additional structural imide units preferably comprise less than 20 mol% of the total number of units, and more preferably can be present in amounts of 0 to 10 mol% of the total number of units, or 0 to 5 mol% of the total number of units, or 0 to 2 mole % of the total number of units. In some embodiments, no additional imide units are present in the polyetherimide. The polyimide and polyetherimide can be prepared by any of the methods well known to those skilled in the art, including the reaction of an aromatic bis(ether anhydride) of formula (5a) or formula (5b)

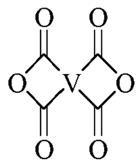

(5a)

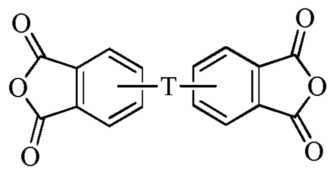

(5b)

or a chemical equivalent thereof, with an organic diamine of formula (6)

$$H_2N\text{-}R\text{-}NH_2 \qquad (6)$$

wherein V, T, and R are defined as described above. Copolymers of the polyetherimides can be manufactured using a combination of an aromatic bis(ether anhydride) of formula (5) and a different bis(anhydride), for example a bis(anhydride) wherein T does not contain an ether functionality, for example T is a sulfone.

Illustrative examples of bis(anhydride)s include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, as well as various combinations thereof.

Examples of organic diamines include hexamethylenediamine, polymethylated 1,6-n-hexanediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl- 1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. Combinations of these compounds can also be used. In some embodiments the organic diamine is m-phenylenediamine, p-phenylenediamine, 4,4'-diaminodiphenyl sulfone, or a combination comprising at least one of the foregoing.

The polyimide can be a copolymer with a siloxane. A poly(siloxane-etherimide) copolymer comprises polyetherimide units of formula (3) and siloxane blocks of formula (7)

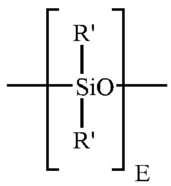

(7)

wherein E of the siloxane is 2 to 50, 5, to 30, or 10 to 40; each R' is independently a $C_{1-13}$ monovalent hydrocarbyl group. For example, each R' can independently be a $C_{1-13}$ alkyl group, $C_{1-13}$ alkoxy group, $C_{2-13}$ alkenyl group, $C_{2-13}$ alkenyloxy group, $C_{3-6}$ cycloalkyl group, $C_{3-6}$ cycloalkoxy group, $C_{6-14}$ aryl group, $C_{6-10}$ aryloxy group, $C_{7-13}$ arylalkyl group, $C_{7-13}$ arylalkoxy group, $C_{7-13}$ alkylaryl group, or $C_{7-13}$ alkylaryloxy group. The foregoing groups can be fully or partially halogenated with fluorine, chlorine, bromine, or iodine, or a combination comprising at least one of the foregoing. In an embodiment no bromine or chlorine is present, and in another embodiment no halogens are present. Combinations of the foregoing R groups can be used in the same copolymer. In an embodiment, the polysiloxane blocks comprises R' groups that have minimal hydrocarbon content. In a specific embodiment, an R' group with a minimal hydrocarbon content is a methyl group.

The poly (siloxane-etherimide)s can be formed by polymerization of an aromatic bisanhydride and a diamine component comprising an organic diamine as described above or mixture of diamines, and a polysiloxane diamine of formula (8)

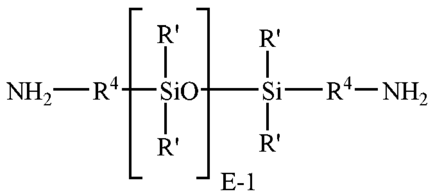

(8)

wherein R' and E are as described in formula (7), and $R^4$ is each independently a $C_2$-$C_{20}$ hydrocarbon, in particular a $C_2$-$C_{20}$ arylene, alkylene, or arylenealkylene group. In an embodiment $R^4$ is a $C_2$-$C_{20}$ alkylene group, specifically a $C_2$-$C_{10}$ alkylene group such as propylene, and E has an average value of 5 to 100, 5 to 75, 5 to 60, 5 to 15, or 15 to 40. Procedures for making the polysiloxane diamines of formula (8) are well known in the art.

In some poly(siloxane-etherimide)s the diamine component can contain 10 to 90 mole percent (mol %), or 20 to 50 mol%, or 25 to 40 mol% of polysiloxane diamine (8) and 10 to 90 mol%, or 50 to 80 mol%, or 60 to 75 mol% of diamine (6), for example as described in US Patent 4,404,350. The diamine components can be physically mixed prior to reaction with the bisanhydride(s), thus forming a substantially random copolymer. Alternatively, block or alternating copolymers can be formed by selective reaction of (6) and (8) with aromatic bis(ether anhydrides (5), to make polyimide blocks that are subsequently reacted together. Thus, the poly(siloxane-imide) copolymer can be a block, random, or graft copolymer. In an embodiment the copolymer is a block copolymer.

Examples of specific poly(siloxane-etherimide)s are described in US Pat. Nos. 4,404,350, 4,808,686 and 4,690,997. In an embodiment, the poly(siloxane-etherimide) has units of formula (9)

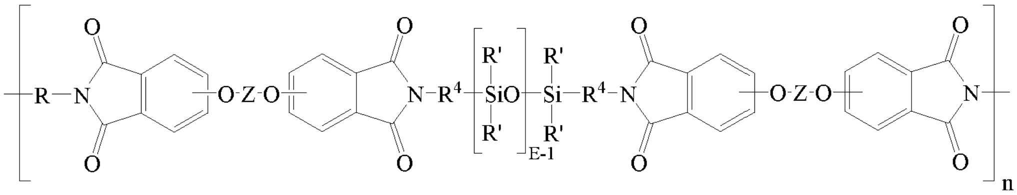

(9)

wherein R' and E of the siloxane are as in formula (5), the R of the imide is as in formula (1) and Z is as in formula (3), $R^4$ is the same as $R^4$ as in formula (8), and n is an integer from 5 to 100. In a specific embodiment, the R of the etherimide is a phenylene, Z is a residue of bisphenol A, $R^4$ is n-propylene, E is 2 to 50, 5, to 30, or 10 to 40, n is 5 to 100, and each R' of the siloxane is methyl.

The relative amount of polysiloxane units and etherimide units in the poly(siloxane-etherimide) depends on the desired properties, and are selected using the guidelines provided herein. In particular, as mentioned above, the block or graft poly(siloxane-etherimide) copolymer is selected to have a certain average value of E, and is selected and used in amount effective to provide the desired wt% of polysiloxane units in the composition. In an embodiment the poly(siloxane-etherimide) comprises 10 to 50 wt%, 10 to 40 wt%, or 20 to 35 wt% polysiloxane units, based on the total weight of the poly(siloxane-etherimide).

The polyimides and polyetherimides can have a melt index of 0.1 to 10 grams per minute (g/min), as measured by American Society for Testing Materials (ASTM) D1238 at 340 to 370°C, using a 6.7 kilogram (kg) weight. In some embodiments, the polyetherimide polymer has a weight average molecular weight (Mw) of 1,000 to 150,000 grams/mole (Dalton), as measured by gel permeation chromatography, using polystyrene standards. In some embodiments the polyetherimide has an Mw of 10,000 to 80,000 Daltons. Such polyetherimide polymers typically have an intrinsic viscosity greater than 0.2 deciliters per gram (dl/g), or, more specifically, 0.35 to 0.7 dl/g as measured in m-cresol at 25 °C.

The composite includes a vulcanizing agent. Vulcanizing agents include aromatic or aliphatic polyhydroxy aromatic compounds, or derivatives thereof, such as di-, tri- and tetrahydroxy benzenes, naphthalenes, or anthracenes, bisphenols in which the two aromatic rings are bonded together via a divalent aliphatic, cycloaliphatic or aromatic radical, or via an oxygen or sulfur atom, or alternatively a carbonyl group. The aromatic rings can be substituted with one or more chlorine, fluorine, or bromine atoms or with carbonyl, alkyl, or acyl groups. Bisphenol AF, bisphenol A and hydroquinone are exemplary vulcanizing agents.

Vulcanizing agents also include amine vulcanizing agents such as hexamethylene diamine, hexamethylene diamine dicarbamate, and dicinnamylidene hexamethylene diamine.

The composite can further include an additive composition comprising one or more additives that are generally known in the art to be useful for polymeric compositions, with the proviso that the one or more additives do not significantly adversely affect one or more of the desired properties of the composition. In an aspect, the additive is a rubber accelerator, a thermal stabilizer, a UV stabilizer, or a combination comprising at least one of the foregoing.

Rubber accelerators can optionally be present, which include quaternary ammonium or phosphonium salts such as quaternary phosphonium salts and aminophosphonium salts. Exemplary rubber accelerators include tetrabutyl ammonium acid sulfate, tetrabutyl ammonium bromide, 8-benzyl-1,8-diazabicyclo [5.4.0.] undeca-7-enium chloride, p-toluenesulfonic acid, 1,8-diazabicyclo [5.4.0.] undeca-7-eniuin, tetrabutyl phosphonium chloride, trioctylmethyl phosphonium chloride, triphenyl benzyl phosphonium chloride, 1,8-diazabicyclo [5.4.0.] undeca-7-salt, pyridine, tributylamine, triphenylphosphine, tributylphosphite.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB 5411 from Cytec) or combinations comprising at least one of the foregoing light stabilizers.

Thermal stabilizer additives include organophosphites (e.g. triphenyl phosphite, tris-(2,6-dimethylphenyl)phosphite, tris-(mixed mono-and di-nonylphenyl)phosphite, phosphonates (e.g, dimethylbenzene phosphonate), phosphates (e.g., trimethyl phosphate,), or combinations comprising at least one of the foregoing heat stabilizers. The heat stabilizer can be tris(2,4-di-t-butylphenyl) phosphate available as IRGAPHOS™ 168.

Additional additives can include an impact modifier, flow modifier, filler, reinforcing agent, antioxidant, heat stabilizer, light stabilizer, ultraviolet (UV) light stabilizer, UV absorbing additive, plasticizer, lubricant, release agent, antistatic agent, anti-fog agent, antimicrobial agent, colorant (e.g., a dye or pigment), surface effect additive, radiation stabilizer, flame retardant, anti-drip agent, or a combination comprising one or more of the foregoing. The additional additive can generally be included in any amount that is known to be effective, for example 0 to 20 weight percent, for

example 0.1 to 10 weight percent based on the total weight of the polymer components (e.g., the polyimide, fluoroelastomer, or combination thereof).

In an embodiment, the additional additives include a filler, for example a particulate mineral filler or reinforcing fibers. Possible fillers or reinforcing agents include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, $TiO_2$, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated with a layer of metallic material to facilitate conductivity, or surface treated with silanes to improve adhesion and dispersion with the polymer matrix. Fillers can be used in amounts of 1 to 200 parts by weight, based on 100 parts by weight of the total composition.

A method of making a composite comprises blending a fluoroelastomer, 0.1 to 5.0 parts by weight of a vulcanizing agent per hundred parts of the fluoroelastomer, 5 to 50 parts by weight of a polyimide per hundred parts by weight of the fluoroelastomer, and 0 to 20 parts by weight of an additive composition per hundred parts by weight of the fluoroelastomer, to provide a composition comprising the polyimide substantially evenly dispersed in the fluoroelastomer. The composition is then cured. Temperature, time, and pressure conditions for effective cure depend on the particular elastomer and cure agent used, as well as their relative amounts, and are known to those of ordinary skill in the art. For example, cure can be conducted at 50 to 200°C, for 10 minutes to 3 hours, at a pressure greater than atmospheric, for example 0.5 to 50 megaPascal (MPa). In an embodiment, the polyimide is in powder form and has a particle diameter of 1 $\mu$m to 1 mm.

Also included herein are articles comprising the fluoroelastomer-polyimide composite described herein. In some embodiments the article comprises a metal substrate and the fluoroelastomer-polyimide composite disposed on at least a portion of the metal substrate. The metal substrate can have any configuration, for example a layer or other three-dimensional form. Articles comprising the metal substrate and the fluoroelastomer-polyimide composite are also disclosed. Exemplary articles include sealing devices or devices requiring vibration dampening such as O-rings, gaskets, pipes, fittings, hoses, stem seals, shaft seals, diaphragms, electric wires, shock-absorbing materials. In a preferred embodiment, the articles are used under severe environments such as in automotive, aerospace, and oil and gas applications.

The invention is further illustrated by the following Examples.

## EXAMPLES

In the following Examples, hardness was tested via a Shore durometer according to ASTM D 2240.

The tensile testing was conducted using a tensile machine according to ASTM D 412.

Density was tested according to ASTM D297.

FL, T10, T50, T90, and Fmax were test on a vulcameter (rubber vulcanization machine) according to ASTM D5289/ASTM D2084/GBT16584. FL is the minimum torque. T10, T50, T90 are scorch time, in minutes, time to an increase of 10, 50, 90 units of force or torque from FL according to ASTM5298. F max is the maximum force when the vulcanization curve turns flat.

Compression set was determined according to ASTM D623, a percentage of original thickness as CA.

$$CA=[(to-ti)/to]*100,$$

where to=original thickness and ti=final thickness.

Brittleness was determined according to GB1682.

Dimensional change was determined by measurement of volume changing ratio according to GB1690 before and after heat aging or chemical exposure, and is given in percent.

For automotive transmission gear box bench testing, two samples were formed into seals as shown in FIG. 2. The seals were assembled to the gear box with transmission oil inside After a certain number of hours, if no oil was leaking from the seal as determined by a visual check, the test was marked as pass, otherwise the test was marked as fail.

Examples 1-2

A composite of FKM (a terpolymer of tetrafluoroethylene (TFE), vinylidene fluoride (VDF) and hexafluoropropylene (HFP)), polyetherimide (PEI) powder, and a vulcanizing agent was made by blending the three components using a mixing mill (an open mill) with two rollers at room temperatures in amounts according to the Table. The vulcanizing agent was bisphenol AF (hexafluorobisphenol A) in an amount of 2.5 parts by weight based on parts by weight of the rubber (phr), and the polyetherimide was ULTEM™ 1000F3SP-1000 from SABIC. Formation of a "triangle shape" followed by a "sheet shape" was performed 10 times or more to provide a composite in which the PEI powder was fully dispersed in the FKM fluoroelastomer. Once the blending process was complete, 3 mm-thick sheets were prepared for curing. Curing was performed at 170°C for 10 minutes via a vulcameter followed by post curing at 200°C for 16 hours to complete sample preparation for testing.

A neat FKM (FTE-HFP-VDF) rubber (Comparative Ex. 1) was compared to a composite of FKM with PEI (Ex. 2). The properties are provided in Table 1.

Table 1.

| **Component** | **Unit** | **CEx.** 1 **(Neat rubber)** | **Ex. 2 (Composite)** |
|---|---|---|---|
| FKM (FTE-HFP-VDF) | Phr | 100 | 100 |
| PEI | Phr | - | 10 |
| Vulcanizing agent | Phr | 2.5 | 2.5 |
| **Properties** | **Unit** | **CEx.1** | **Ex. 2** |
| Shore A Hardness | | 73 | 81 |
| Density | $g/cm^3$ | 2.12 | 2.07 |
| Tensile strength at 100% elongation | MPa | 6.79 | 9.09 |
| Tensile strength at break | MPa | 15.22 | 16.28 |
| Elongation | % | 223 | 193 |
| F max | dN.m | 1.505 | 1.596 |
| T10 | min | 2.03 | 1.46 |
| T90 | min | 4.21 | 4.58 |

As can be seen in Table 1, the composites according to the present disclosure (Ex. 2) had enhanced mechanical performance and comparable curing (vulcanization) behavior compared to the neat fluoroelastomer (CEx. 1).

A scanning electron micrograph (SEM) of CEx. 1 is shown in FIG. 1A, and an SEM of Ex. 2 is shown in FIG. IB. As can be seen, the PEI powders are well dispersed in the rubber matrix with good compatibility which enhances the mechanical performance.

Examples 3-7

These Examples were prepared as described above.

A neat composition containing FKM/VDF-HFP/vulcanizing chemical precompound and FKM rubber but no PEI (Comparative Ex. 3) was compared to the same fluoroelastomer composition with PEI (Ex. 4 and 6) or PEI-Si (Ex. 5 and 7). The properties of the Examples were tested before and after heat aging or exposure to chemical conditions, e.g., fuel and oil. The properties are shown in Table 2.

In addition, two examples were formed into an automotive sealing part, and bench tested for use as an automotive transmission gear box for 500 hours, 1000 hours and 1500 hours.

Table 2

| Component (phr) | Grade and Source | CEx.3 | Ex.4 | Ex.5 | Ex.6 | Ex.7 |
|---|---|---|---|---|---|---|
| Precompounded FKM, VDF-HFP, and cure agent | A401C (DuPont) | 80 | 80 | 80 | 80 | 80 |
| FKM rubber | CG2602 (local) | 20 | 20 | 20 | 20 | 20 |
| Wax | C-WAX | 1 | 1 | 1 | 1 | 2 |
| MgO | MA150 | 3 | 3 | 3 | 3 | 3 |
| $CaOH_2$ | OMM-2 | 6 | 6 | 6 | 6 | 6 |
| $CaSiO_3$ | 600EST | 30 | 20 | 20 | 30 | 20 |
| PEI | 1000FP-1000 (SABIC) | 0 | 8 | 0 | 10 | 0 |
| PEI-Si | STM1700FP (SABIC) | 0 | 0 | 8 | 0 | 10 |
| **Properties as made** | **Units** | **CEx.3** | **Ex.4** | **Ex.5** | **Ex.6** | **Ex.7** |
| Hardness | Shore A | 71 | 73 | 73 | 76 | 73 |
| Density | $g/cm^3$ | 2.01 | 1.9 | 1.9 | 1.95 | 1.87 |
| 100% elongation strength | MPa | 7.04 | 5.82 | 5.81 | 8.45 | 6.26 |
| Tensile Strength | MPa | 12.41 | 11.71 | 13.7 | 14.79 | 10.39 |
| Elongation at break | MPa | 197 | 256 | 255 | 192 | 212 |
| FL | dN.M | 0.183 | 0.195 | 0.259 | 0.214 | 0.262 |
| Fmax | dN.M | 1.519 | 1.495 | 1.508 | 1.751 | 1.553 |
| T10 | min | 1.28 | 1.28 | 1.09 | 1.26 | 1.07 |
| T50 | min | 1.5 | 1.56 | 1.3 | 1.51 | 1.27 |
| T90 | min | 2.35 | 2.59 | 2.04 | 2.4 | 2.01 |
| Compression Set (200dc*70 hrs) | % | 23.02 | 28.78 | 43.88 | 31.88 | 40.43 |
| **Properties after Aging (250°C for 70 hr)** | **Units** | **CEx.3** | **Ex.4** | **Ex.5** | **Ex.6** | **Ex.7** |
| Tensile strength at 100% elongation | MPa | 7.06 | | | 10.02 | 8.31 |
| Tensile Strength | MPa | 12.75 | | | 15.2 | 14.09 |
| Elongation at break | MPa | 174 | | | 182 | 183 |
| Hardness | Shore A | 71 | | | 79 | 76 |
| | | | | | | |
| **Properties after Exposure to Fuel C (23°C, 70 hr)** | **Units** | **CEx.3** | **Ex.4** | **Ex.5** | **Ex.6** | **Ex.7** |
| Tensile Strength | MPa | 11.56 | | | 10.98 | 9.47 |
| Elongation at break | MPa | 193 | | | 204 | 193 |
| Hardness | Shore A | 67 | | | 72 | 71 |
| Dimensional change | % | 3.7 | | | 3.54 | 3.36 |
| Brittleness temp | °C | -26 | | | -18 | -20 |
| | | | | | | |
| **Properties after Exposure to engine oil (5W-30, 150°C, 94 hr)** | **Units** | **CEx.3** | **Ex.4** | **Ex.5** | **Ex.6** | **Ex.7** |
| Tensile Strength | MPa | 14.02 | | | 13.55 | 11.54 |
| Elongation at break | MPa | 172 | | | 157 | 160 |
| Hardness | MPa | 69 | | | 74 | 71 |
| Dimensional Change | % | 0.29 | | | 0.18 | 0.21 |
| | **Units** | **CEx.3** | **Ex.4** | **Ex.5** | **Ex.6** | **Ex.7** |
| **Bench testing for automotive transmission gear-box** | 500 hr | | Pass | Pass | | |
| | 1000 hr<br>1500 hr | | Pass<br>Pass | Pass<br>Pass | | |

As can be seen from the data in Table 2, PEI blended FKM rubber showed balanced performance compared with the fluoroelastomer without PEI. At the same filler loading, 30% $CaSiO_3$, CEx. 3 and Ex. 6, the fluoropolymer with PEI showed significant improved tensile strength compared with the fluoropolymer without PEI and the tensile strength was retained after aging and exposure to fuel and oil.

The bench testing of the seals made from the compositions of Ex. 4 and Ex. 5 show that they are suitable for use in an automotive transmission gear box.

FIG. 3A is an SEM showing the composition of Ex. 4 before cure, and FIG. 3B is an SEM showing the composition

of Ex. 4 after cure. As can be seen from FIG. 3A and 3B, after the curing process, the powder containing PEI was well melted and merged with the fluoroelastomer matrix in 3B, while the PEI powder could be observed in FIG. 3A before the curing.

FIG. 4A is an SEM showing the composition of Ex. 5 before cure, and FIG. 4B is an SEM showing the composition of Ex. 5 after cure. As can be seen from FIG. 4A and 4B, after the curing process, the powder containing PEI was well melted and merged with the fluoroelastomer matrix in 4B, while the PEI powder could be observed in FIG. 4A before the curing.

All ranges disclosed herein are inclusive of the endpoints, and the endpoints are independently combinable with each other. "Combinations" is inclusive of blends, mixtures, alloys, reaction products. The terms "first," "second," , do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments," "an embodiment," and so forth, means that a particular element described in connection with the embodiment is included in at least one embodiment described herein, and may or may not be present in other embodiments. In addition, it is to be understood that the described elements can be combined in any suitable manner in the various embodiments.

Unless defined otherwise, technical and scientific terms used herein have the same meaning as is commonly understood by one of skill in the art to which this application belongs. Unless specified otherwise, all standards (e.g., ASTM, ISO, and others), are the most recent version as of May 1, 2016.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl ($-HC=CH_2$)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene ($-CH_2-$) or, propylene ($-(CH_2)_3-$)). "Cycloalkylene" means a divalent cyclic alkylene group, $-C_nH_{2n-x}$, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a $C_{1-9}$ alkoxy, a $C_{1-9}$ haloalkoxy, a nitro ($-NO_2$), a cyano (-CN), a $C_{1-6}$ alkyl sulfonyl ($-S(=O)_2$-alkyl), a $C_{6-12}$ aryl sulfonyl ($-S(=O)_2$-aryl)a thiol (-SH), a thiocyano (-SCN), a tosyl ($CH_3C_6H_4SO_2-$), a $C_{3-12}$ cycloalkyl, a $C_{2-12}$ alkenyl, a $C_{5-12}$ cycloalkenyl, a $C_{6-12}$ aryl, a $C_{7-13}$ arylalkylene, a $C_{4-12}$ heterocycloalkyl, and a $C_{3-12}$ heteroaryl instead of hydrogen, provided that the substituted atom's normal valence is not exceeded. The number of carbon atoms indicated in a group is exclusive of any substituents. For example $-CH_2CH_2CN$ is a $C_2$ alkyl group substituted with a nitrile.

## Claims

1. An article comprising a composite and a metal substrate, wherein the composite is disposed on at least a portion of the metal substrate, and the composite comprises:

   a fluoroelastomer,
   0.1 to 5.0 parts by weight of a vulcanizing agent, based on 100 parts by weight of the fluoroelastomer,
   0 to 20 parts by weight of an additive composition, based on 100 parts by weight of the fluoroelastomer, and
   5 to 50 parts by weight of a polyimide, based on 100 parts by weight of the fluoroelastomer,
   wherein the polyimide is a polyetherimide homopolymer or copolymer comprising units of the formula

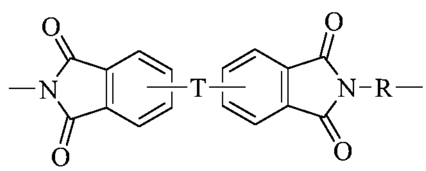

wherein

each R is the same or different, and is a substituted or unsubstituted $C_{2-20}$ divalent organic group,
T is -O- or a group of the formula -O-Z-O- wherein the divalent bonds of the -O-or the -O-Z-O- group are in the 3,3', 3,4', 4,3', or the 4,4' positions, and
Z is an aromatic $C_{6-24}$ monocyclic or polycyclic moiety optionally substituted with 1 to 6 $C_{1-8}$ alkyl groups, 1 to 8 halogen atoms, or a combination comprising at least one of the foregoing, provided that the valence of Z is not exceeded.

**2.** The article of claim 1, wherein the additive composition comprises a rubber accelerator, a thermal stabilizer, an ultraviolet light stabilizer, or a combination comprising at least one of the foregoing.

**3.** The article of any one or more of claims 1 or 2, wherein the fluoroelastomer is a copolymer of hexafluoropropylene and vinylidene fluoride; a terpolymer of tetrafluoroethylene, vinylidene fluoride and hexafluoropropylene; or a combination comprising at least one of the foregoing.

**4.** The article of claim 1, wherein
R is a group of the formula

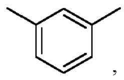 , 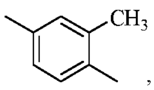 , 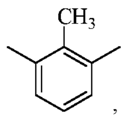 , 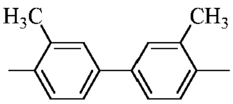 , 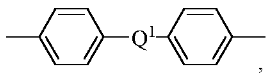 ,

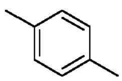 , 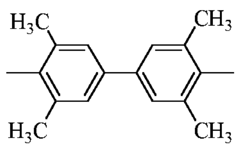 , 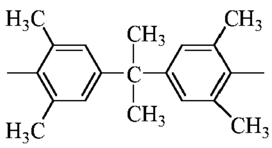 , 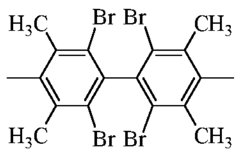 ,

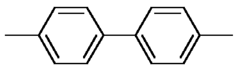 , or 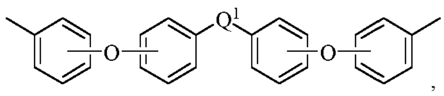 ,

wherein $Q^1$ is -O-, -S-, -C(O)-, $-SO_2-$, -SO-, $-C_yH_{2y}-$ and a halogenated derivative thereof, wherein y is an integer from 1 to 5, or $-(C_6H_{10})_z-$, wherein z is an integer from 1 to 4; and
Z is a group derived from a dihydroxy compound of the formula

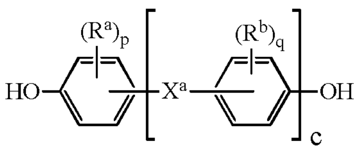

wherein

$R^a$ and $R^b$ are each independently a halogen atom or a monovalent $C_{1-6}$ alkyl group;
p and q are each independently integers of 0 to 4;
c is 0 to 4; and
$X^a$ is a single bond, -O-, -S-, -S(O)-, $-SO_2-$, -C(O)-, or a $C_{1-18}$ organic bridging group.

**5.** The article of claim 1, wherein each R is independently meta-phenylene or para-phenylene, and Z is 4,4'-diphenylene isopropylidene.

**6.** The article of claim 1, wherein the polyetherimide is a copolymer comprising units of the formula

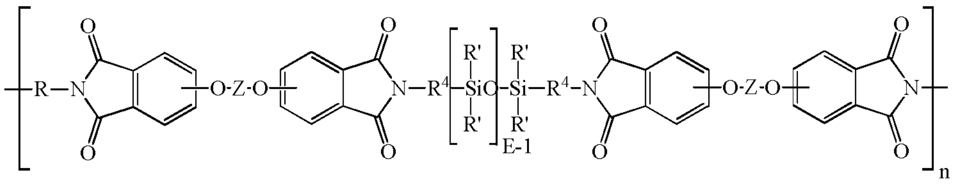

wherein

the R and Z are as in claim 1,
each R' is independently a $C_{1-13}$ monovalent hydrocarbyl group,
each $R^4$ is independently a $C_{2-20}$ hydrocarbylene group,
E is 2 to 50, 5 to 30, or 10 to 40, and
n is an integer from 3 to 1000, or 5 to 500, or 10 to 100.

7. The article of any one or more of claims 1 to 6, wherein the composite has superior metal adhesion compared to the same composition without the polyimide.

8. The article of any one or more of claims 1 to 7, wherein the article is a sealing device or an article in need of vibration dampening.

**Patentansprüche**

1. Artikel, umfassend einen Verbundstoff und ein Metallsubstrat, wobei der Verbundstoff auf mindestens einem Teil des Metallsubstrats angeordnet ist und der Verbundstoff umfasst:

ein Fluorelastomer,
0,1 bis 5,0 Gewichtsteile eines Vulkanisationsmittels, bezogen auf 100 Gewichtsteile des Fluorelastomers,
0 bis 20 Gewichtsteile einer Additivzusammensetzung, bezogen auf 100 Gewichtsteile des Fluorelastomers, und
5 bis 50 Gewichtsteile eines Polyimids, bezogen auf 100 Gewichtsteile des Fluorelastomers,
wobei das Polyimid ein Polyetherimid-Homopolymer oder -Copolymer ist, umfassend Einheiten der Formel

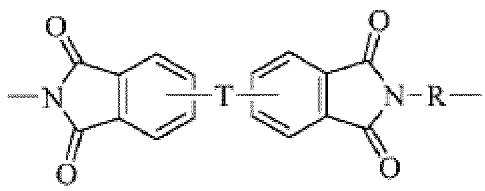

,

wobei

jedes R gleich oder verschieden ist und eine substituierte oder unsubstituierte zweiwertige organische $C_{2-20}$-Gruppe ist,
T -O- oder eine Gruppe der Formel -O-Z-O- ist, wobei die zweiwertigen Bindungen des -O- oder der -O-Z-O-Gruppe in den 3,3'-, 3,4'-, 4,3'- oder den 4,4'-Stellungen sind, und
Z eine aromatische monocyclische oder polycyclische $C_{6-24}$-Einheit ist, die optional mit 1 bis 6 $C_{1-8}$-Alkylgruppen, 1 bis 8 Halogenatomen oder einer Kombination, umfassend mindestens eines der vorstehenden, substituiert ist, vorausgesetzt, dass die Wertigkeit von Z nicht überschritten wird.

2. Artikel nach Anspruch 1, wobei die Additivzusammensetzung einen Kautschukbeschleuniger, einen Wärmestabilisator, einen Ultraviolettlicht-Stabilisator oder eine Kombination, umfassend mindestens einen der vorstehenden, umfasst.

3. Artikel nach einem oder mehreren der Ansprüche 1 oder 2, wobei das Fluorelastomer ein Copolymer von Hexafluorpropylen und Vinylidenfluorid; ein Terpolymer von Tetrafluorethylen, Vinylidenfluorid und Hexafluorpropylen oder eine Kombination, umfassend mindestens eines der vorstehenden, ist.

4. Artikel nach Anspruch 1, wobei
R eine Gruppe der Formel

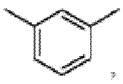, 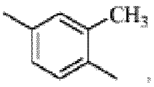, 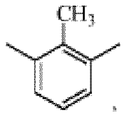, 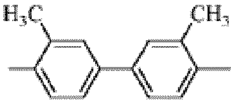, 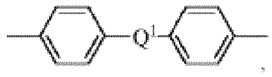,

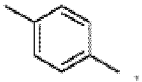, 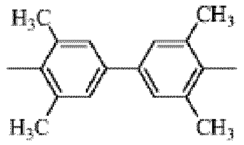, 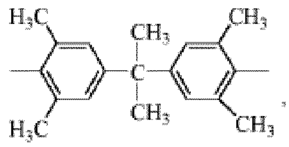, 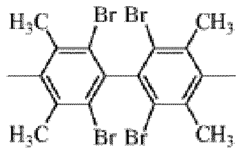,

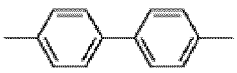 oder 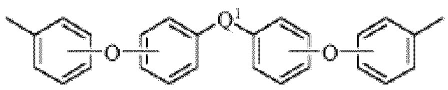

ist,

wobei $Q^1$ -O-, -S-, -C(O)-, $-SO_2-$, -SO-, $-C_yH_{2y}-$ und ein halogeniertes Derivat davon, wobei y eine ganze Zahl von 1 bis 5 ist, oder $-(C_6H_{10})_z-$, wobei z eine ganze Zahl von 1 bis 4 ist, ist; und
Z eine Gruppe ist, die von einer Dihydroxyverbindung der Formel

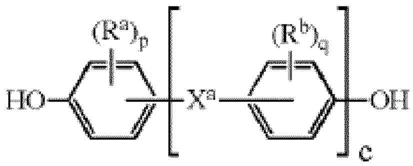

abgeleitet ist, wobei

$R^a$ und $R^b$ jeweils unabhängig ein Halogenatom oder eine einwertige $C_{1-6}$-Alkylgruppe sind;
p und q jeweils unabhängig ganze Zahlen von 0 bis 4 sind;
c 0 bis 4 ist und
$X^a$ eine Einfachbindung, -O-, -S-, -S(O)-, $-SO_2-$, -C(O)- oder eine organische $C_{1-18}$-Brückengruppe ist.

5. Artikel nach Anspruch 1, wobei jedes R unabhängig meta-Phenylen oder para-Phenylen ist und Z 4,4'-Diphenylenisopropyliden ist.

6. Artikel nach Anspruch 1, wobei das Polyetherimid ein Copolymer ist, umfassend Einheiten der Formel

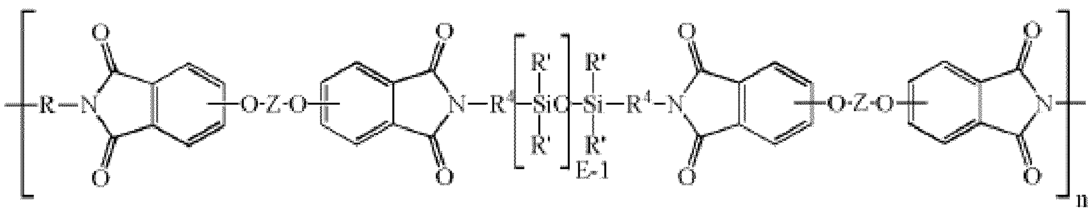,

wobei

das R und das Z wie in Anspruch 1 sind,
jedes R' unabhängig eine einwertige $C_{1-13}$-Hydrocarbylgruppe ist,
jedes $R^4$ unabhängig eine $C_{2-20}$-Hydrocarbylengruppe ist,
E 2 bis 50, 5 bis 30 oder 10 bis 40 ist und

n eine ganze Zahl von 3 bis 1000 oder 5 bis 500 oder 10 bis 100 ist.

**7.** Artikel nach einem oder mehreren der Ansprüche 1 bis 6, wobei der Verbundstoff eine bessere Metalladhäsion im Vergleich zu der gleichen Zusammensetzung ohne das Polyimid aufweist.

**8.** Artikel nach einem oder mehreren der Ansprüche 1 bis 7, wobei der Artikel eine Abdichtungsvorrichtung oder ein Artikel, der einer Schwingungsdämpfung bedarf, ist.

## Revendications

**1.** Article comprenant un composite et un substrat métallique, le composite étant disposé sur au moins une portion du substrat métallique, et le composite comprenant :

un élastomère fluoré,
de 0,1 à 5,0 parties en poids d'un agent de vulcanisation, sur la base de 100 parties en poids de l'élastomère fluoré,
de 0 à 20 parties en poids d'une composition d'additif, sur la base de 100 parties en poids de l'élastomère fluoré, et
de 5 à 50 parties en poids d'un polyimide, sur la base de 100 parties en poids de l'élastomère fluoré,
le polyimide étant un homopolymère ou un copolymère de polyétherimide comprenant des motifs de la formule

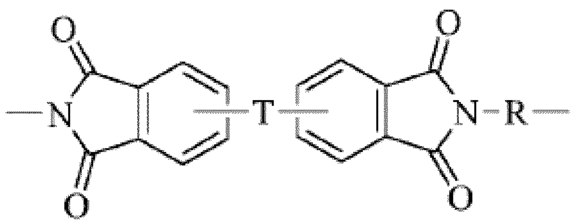

chaque R étant identique ou différent, et étant un groupe organique divalent en $C_2$ à $C_{20}$ substitué ou non substitué,
T étant -O- ou un groupe de la formule -O-Z-O-, les liaisons divalentes du groupe -O- ou du groupe -O-Z-O- étant en positions 3,3', 3,4', 4,3', ou 4,4', et
Z étant une fraction monocyclique ou polycyclique en $C_6$ à $C_{24}$ aromatique éventuellement substituée par 1 à 6 groupes alkyle en $C_1$ à $C_8$, 1 à 8 atomes d'halogène, ou une combinaison comprenant au moins l'un des précédents, à condition que la valence de Z ne soit pas dépassée.

**2.** Article selon la revendication 1, la composition d'additif comprenant un accélérateur de caoutchouc, un agent stabilisant thermique, un agent stabilisant de la lumière ultraviolette, ou une combinaison comprenant au moins l'un des précédents.

**3.** Article selon l'une quelconque ou plusieurs des revendications 1 ou 2, l'élastomère fluoré étant un copolymère d'hexafluoropropylène et de fluorure de vinylidène ; un terpolymère de tétrafluoroéthylène, du fluorure de vinylidène et de l'hexafluoropropylène ; ou une combinaison comprenant au moins l'un des précédents.

**4.** Article selon la revendication 1,
R étant un groupe de la formule

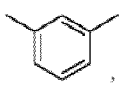 , 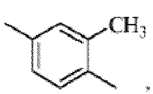 , 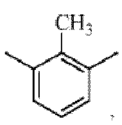 , 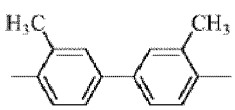 , 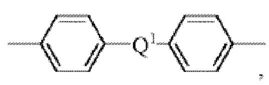 ,

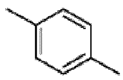,
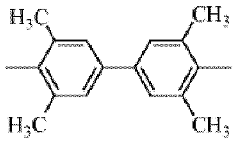,
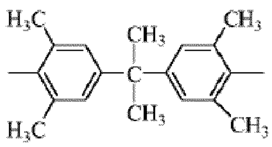,
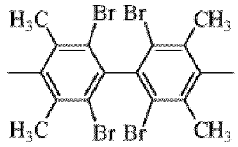,

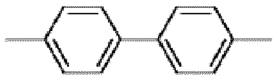, ou 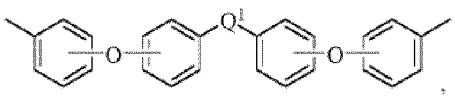,

$Q^1$ étant -O-, -S-, -C(O)-, $-SO_2-$, -SO-, $-C_yH_{2y}-$ et son dérivé halogéné, y étant un nombre entier d'une valeur de 1 à 5, ou $-(C_6H_{10})_z-$, z étant un nombre entier d'une valeur de 1 à 4 ; et
Z étant un groupe dérivé d'un composé dihydroxy de la formule

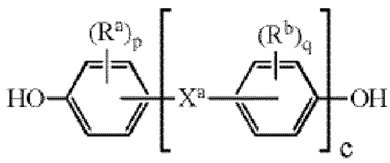

$R^a$ et $R^b$ étant chacun indépendamment un atome d'halogène ou un groupe alkyle en $C_1$ à $C_6$ monovalent ;
p et q étant chacun indépendamment des nombres entiers d'une valeur de 0 à 4 ;
c ayant la valeur de 0 à 4 ; et
$X^a$ étant une simple liaison, -O-, -S-, -S(O)-, $-SO_2-$, -C(O)-, ou un groupe organique pontant en $C_1$ à $C_{18}$.

**5.** Article selon la revendication 1, chaque R étant indépendamment le métaphénylène ou le para-phénylène, et Z étant le 4,4'-diphénylène isopropylidène.

**6.** Article selon la revendication 1, le polyétherimide étant un copolymère comprenant des motifs de la formule

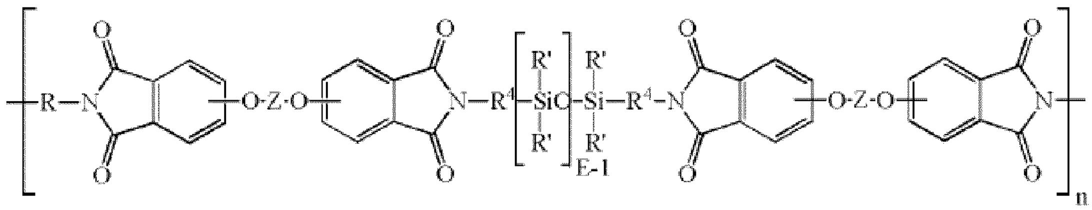

les R et Z étant tels que dans la revendication 1,
chaque R' étant indépendamment un groupe hydrocarbyle monovalent en $C_1$ à $C_{13}$,
chaque $R^4$ étant indépendamment un groupe hydrocarbylène en $C_2$ à $C_{20}$,
E ayant la valeur 2 à 50, 5 à 30, ou 10 à 40, et
n étant un nombre entier d'une valeur de 3 à 1 000, ou de 5 à 500, ou de 10 à 100.

**7.** Article selon l'une quelconque ou plusieurs des revendications 1 à 6, le composite ayant une adhésion supérieure aux métaux comparé à la même composition sans le polyimide.

**8.** Article selon l'une quelconque ou plusieurs des revendications 1 à 7, l'article étant un dispositif d'étanchéité ou un article ayant besoin d'un amortissement des vibrations.

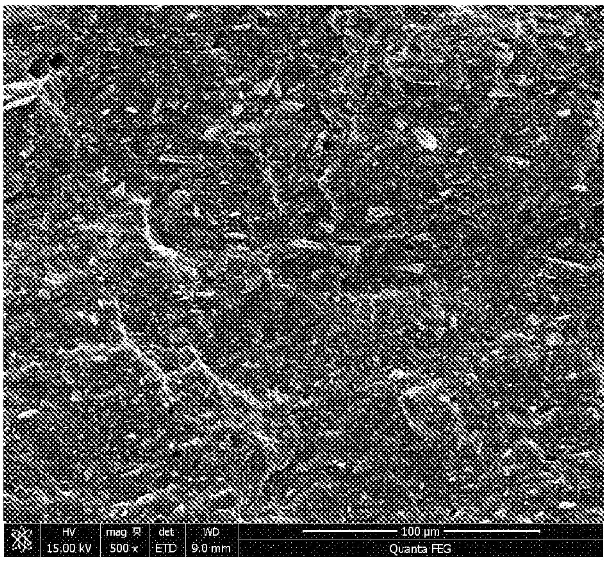


FIG. 1A

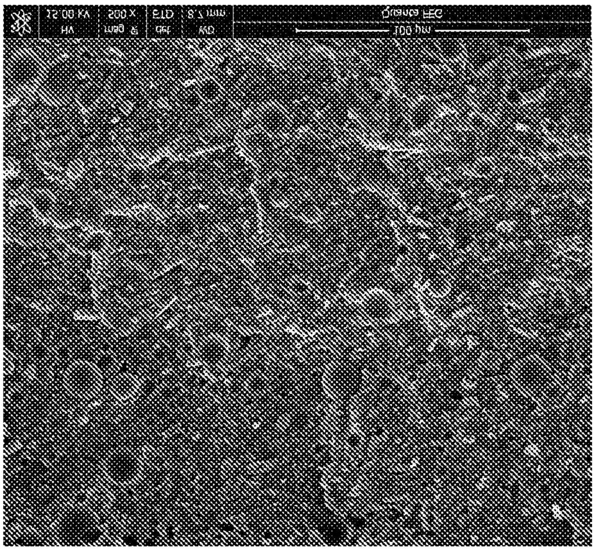

FIG. 1B

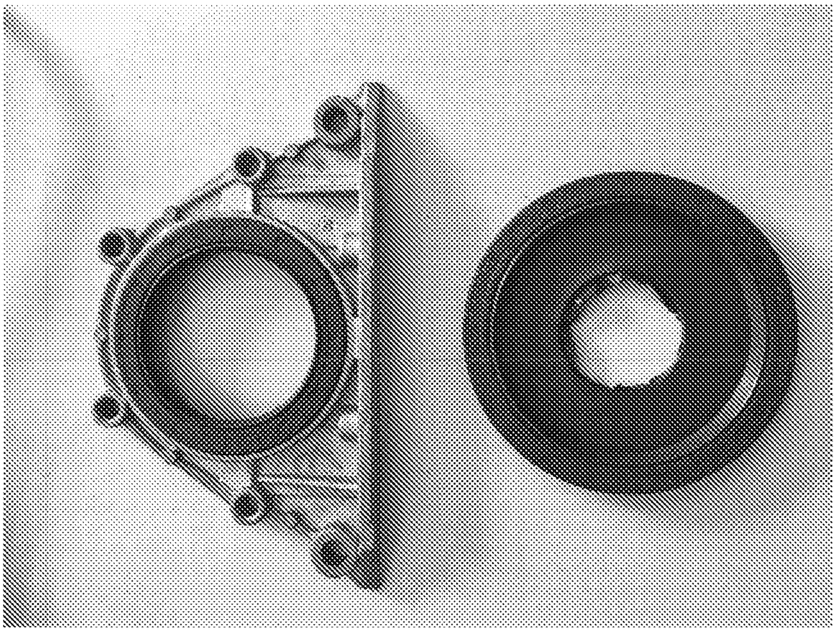

FIG. 2

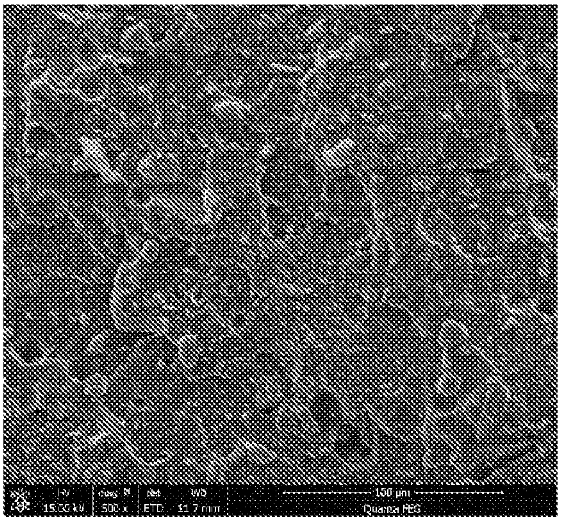

FIG. 3A

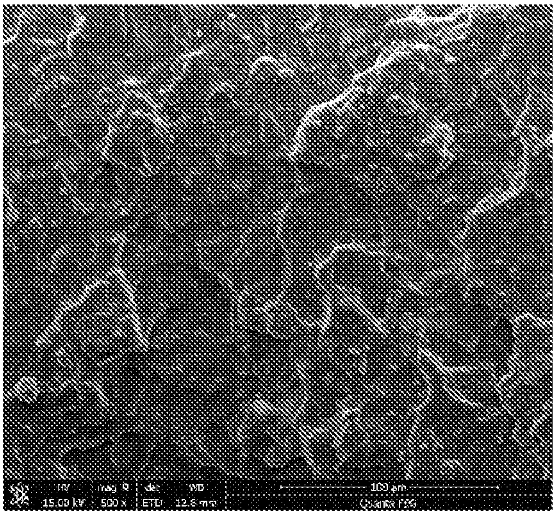

FIG. 3B

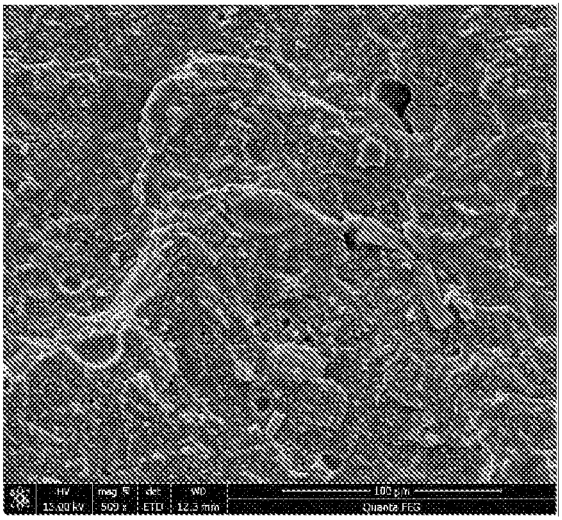

FIG. 4A

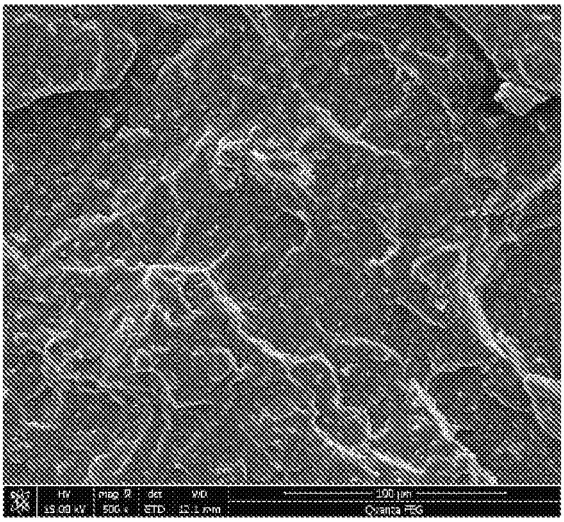

FIG. 4B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2005054753 A1
- US 4404350 A
- US 4808686 A
- US 4690997 A